# EUROPEAN PATENT APPLICATION

(11) **EP 3 385 165 A1**
(43) Date of publication of application: **10.10.2018**
(21) Application number: 17164640.9
(22) Date of filing: 03.04.2017
(51) Int. Cl.: B64D 11/06, B60N 2/34, B60N 2/02, B60N 2/44

(54) **A SEAT FOR A VEHICLE**

(71) Applicant: Adient US LLC, Plymouth MI 48170 (US)
(72) Inventor: KREUTZ, Wolfgang, 66879 Reichenbach-Steegen (DE); JUERSS, Detlef, 51377 Leverkusen (DE)
(74) Representative: Finger, Catrin

(57) **Abstract**

The invention relates to a seat for a vehicle, in particular for an aircraft, comprising:
- a seat pan (19) having a seat pan frame with two lateral seat pan sides, a front seat pan side and a back seat pan side,
- a backrest (16) having a backrest frame which is pivotably mounted to the back seat pan side at a backrest pivot axis,
- a leg rest having a leg rest frame which is pivotably mounted to the front seat pan side at a leg rest pivot axis,
- an adjusting device (1) for adjusting at least the seat pan (19), the backrest (16) or the leg rest,
wherein the seat pan (19), the backrest (16) and the leg rest are articulated with respect to each such that the seat is positionable into at least one of a taxi, takeoff and landing position, a comfort inclined position and a sleeping position by the adjusting device (1),
wherein the adjusting device (1) comprises at least one fitting which is configured as an electric-powered continuously adjustable fitting (1).

## Description

### FIELD OF INVENTION

The present invention refers to a seat for a vehicle, in particular to an aircraft passenger seat.

### DESCRIPTION OF THE RELATED ART

There are a wide variety of vehicle seats, in particular aircraft passenger seats known in the prior art.

US2013/0207433 A1 describes a vehicle seat having a continuously adjustable device such as adjustable fittings activated by an actuator. The adjusting device preferably comprises an override mechanism, the override mechanism permitting manual movement of the locking element between the locking position and the neutral position.

US 2016/0167788 describes an override mechanism bringing the seat in a safe seat position in the event of a failure of one or more actuators or of the power supply to an aircraft seat. The adjusting device has a purely mechanical redundancy, as a result of which the aircraft seat can always be brought into a safety position for critical phases of an aircraft such as take-off, landing or taxiing on the ground. Therefore, the override mechanism can make it possible for the locking element to be switched between the locking position and the neutral position, irrespective of whether or not the corresponding actuator is operable.

### SUMMARY OF THE INVENTION

It is an object of the present invention to provide a seat for a vehicle, in particular an aircraft.

The object is achieved by a seat for a vehicle according to claim 1.

Preferred embodiments of the invention are given in the dependent claims.

According to the invention, a seat for a vehicle, in particular for an aircraft, comprises a seat structure comprising at least:
- a seat pan having a seat pan frame with two lateral seat pan sides, a front seat pan side and a back seat pan side,
- a backrest having a backrest frame which is pivotably mounted to the back seat pan side at a backrest pivot axis,
- a leg rest having a leg rest frame which is pivotably mounted to the front seat pan side at a leg rest pivot axis,
- an adjusting device for adjusting at least the seat pan, the backrest or the leg rest,
wherein the backrest and the leg rest are articulated with respect to the seat pan and/or the seat structure with respect to a base structure such that the seat is positionable into at least one of a taxi, takeoff and landing position, a comfort inclined position and a sleeping position by the adjusting device, wherein the adjusting device comprises at least one fitting which is configured as an electric-powered continuously adjustable fitting.

In an exemplary embodiment, at least one of the seat pan, the backrest or the leg rest comprises a single electric-powered continuously adjustable fitting on each of their lateral sides.

In an exemplary embodiment, the adjusting device is configured to continuously adjust a transmission rod coupling the two fittings to at least one of the seat pan, the backrest or the leg rest.

In an exemplary embodiment, at least one of the fittings, the adjusting device or the transmission rod comprises an override mechanism which brings the seat pan, the backrest and the leg rest in the taxi, takeoff and landing position in the case that the electric-powered continuously adjustable fitting failed.

In an exemplary embodiment, the override mechanism is configured as a manual crank.

In an exemplary embodiment, a motor is provided to actuate the fitting, wherein the motor comprises a gearbox to interface the crank to the motor.

In an exemplary embodiment, the transmission rod comprises a gear mechanism and/or an outer rod end to interface the crank to the transmission rod.

In an exemplary embodiment, the manual crank is configured as a foldable handle which is articulated at a cover attached to the transmission rod and foldable between a swung in position and a swung out position.

In an exemplary embodiment, the seat pan frame is pivotably connected to a base by a single lever on each of the two lateral seat pan sides.

In an exemplary embodiment, the seat pan, the backrest and the leg rest are articulated with respect to each other and with respect to the base by each of the single levers such that the seat is positionable into at least one of a taxi, takeoff and landing position, a comfort inclined position and a sleeping position.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1A: is a perspective view of an embodiment of a seat,
- Figure 1B: is a schematic view of a first embodiment of a powered continuously adjustable fitting for a seat with a mechanical override system,
- Figure 2: is a schematic view of the first embodiment of the powered continuously adjustable fitting with the mechanical override system in use,
- Figure 3: is a schematic view of a second embodiment of a powered continuously adjustable fitting for a seat with a mechanical override system,
- Figure 4: is a schematic view of a third embodiment of a powered continuously adjustable fitting for a seat with a mechanical override system,
- Figure 5: is a schematic view of the third embodiment of the powered continuously adjustable fitting with the mechanical override system in use,
- Figure 6: is a schematic view of a fourth embodiment of a powered continuously adjustable fitting for a seat with a mechanical override system,
- Figure 7: is a schematic view of the fourth embodiment of the powered continuously adjustable fitting with the mechanical override system in use,
- Figure 8: is a schematic view of a fifth embodiment of a powered continuously adjustable fitting for a seat with a mechanical override system,
- Figure 9: is a schematic view of the fifth embodiment of the powered continuously adjustable fitting with the mechanical override system in use,
- Figure 10: is a front view of a cover with a swung in handle,
- Figure 11: is a schematic view of a lever and a wobbling adjuster,
- Figure 12: is another schematic view of a lever and a wobbling adjuster,
- Figure 13: is a schematic view of a seat with frame parts of a seat pan and a backrest connected by a powered continuously adjustable fitting,
- Figures 14 to 16: show different schematic perspective views of a seat with different fitting designs.

Corresponding parts are marked with the same reference symbols in all figures.

### DETAILED DESCRIPTION OF PREFERRED EMBODIMENTS

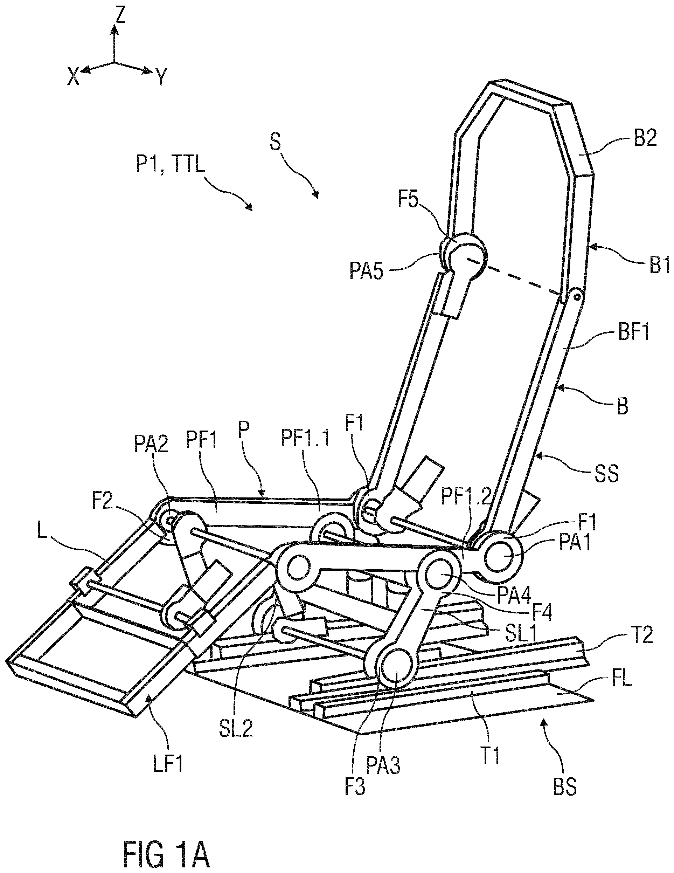

The figure 1A shows a perspective view of an embodiment of a seat S for a not further shown vehicle, in particular for an aircraft. The seat S is shown in a taxi, takeoff, and landing position, which is further described as TTL position P1.

For a better understanding of subsequent descriptions of the seat S a coordinate system is shown in further figures. The coordinate system comprises a longitudinal axis x, a transverse axis y and a vertical axis z in relation to the aircraft.

The seat S comprises a seat pan P, a backrest B and a leg rest L. In the shown embodiment the backrest B comprises a shoulder support B1. In one embodiment, the backrest B can comprise additionally or alternatively a headrest B2, wherein the backrest B shown in figure 1A comprises the headrest B2.

Further, the seat S comprises a seat support structure SS which is connected to a base structure BS. The seat support structure SS can be provided with not shown upholstery. In one embodiment, the upholstery comprises at least one of a seat pan upholstery part, a backrest upholstery part and/or a leg rest upholstery part. Alternatively, the upholstery is provided by a one-piece formed upholstered part. Further, the upholstery can be at least partially attached to the seat support structure SS by not further shown force-fitted, adhesive and/or form-fitted connection points.

In one embodiment, the force-fitted, adhesive and/or form-fitted connection can provide hook and loop fastener, clip, engage, snap-in and/or plug-in connection points. In another embodiment the upholstery comprises a number of upholstered cover elements, wherein the seat support structure SS can be covered by at least one upholstered cover element. In another example, the upholstery and the seat support structure SS can be at least partially bonded together.

The seat support structure SS provides a seat pan frame PF1 for the seat pan P with two lateral seat pan sides PF1.1, PF1.2. Additionally, the seat pan frame PF1, thereby the seat pan P, comprise a front seat pan side and a back seat pan side.

Further, the seat support structure SS comprises a backrest frame BF1 for the backrest B which is pivotably mounted to the back seat pan side at a backrest pivot axis PA1 (which is understood as an axis parallel to the transverse axis y).

Additionally, a leg rest frame LF1 for the leg rest L is provided by the seat support structure SS, wherein the leg rest frame LF1 is pivotably mounted to the front seat pan side at a leg rest pivot axis PA2 (which is understood as an axis parallel to the transverse axis y). In particular, the leg rest L is configured as a calf rest.

Moreover, the seat support structure SS comprises a shoulder support and headrest frame which is pivotably mounted to the backrest frame BF1 at a shoulder support pivot axis PA5. For example, the backrest frame BF1 and the shoulder support and headrest frame are articulated with respect to each other by the shoulder support pivot axis PA5.

According to the disclosure, the backrest B and the leg rest L are articulated with respect to the seat pan P and the seat support structure SS is articulated with respect to single levers SL1, SL2 such that the seat S is positionable into at least one of the TTL position P1, a comfort inclined position (not shown) or a sleeping position (not shown). In particular, the single lever SL1, SL2 is provided by a swing arm mechanism.

The seat pan P, the backrest B, the leg rest L and/or the shoulder support B1 are articulated with respect to each other such that the seat S is positionable into at least one of the TTL position P1, the comfort inclined position and the sleeping position.

According to an exemplary embodiment, the backrest frame BF1 is pivotably connected to the seat pan frame PF1 by at least one of a backrest pivot fitting F1 in the backrest pivot axis PA1. The leg rest frame LF1 is pivotably connected to the seat pan frame PF1 by at least one of a leg rest pivot fitting F2 in the leg rest pivot axis PA2. In particular, each of the pivot fittings F1, F2 is provided by a recliner mechanism and thereby comprising recliner fittings.

The base structure BS provides a track mechanism for length adjustment of the seat S. Therefore, the track mechanism provides a length adjuster for the seat S.

The track mechanism provides a lower track T1 fixedly coupled to the aircraft floor FL and an upper track T2 which is slidable coupled to the lower track T1 for a sliding movement in a longitudinal direction of the aircraft.

In the shown embodiment, the seat pan frame PF1 is connected to the upper track T2 in a front region of the upper track T2. In particular, the seat pan frame PF1 is pivotably connected to the upper track T2 on each of the two lateral seat pan sides PF1.1, PF1.2. Therefore, the seat pan P, the backrest B and the leg rest L are articulated with respect to each other and with respect to the base structure BS by each of the single levers SL1, SL2. In particular, the backrest B and the leg rest L are pivotable with respect to the seat pan P. The seat structure SS with its components such as the seat pan P, the backrest B and the leg rest L are articulated with respect to each other by electric-powered fittings F1 to Fn and with respect to the base structure BS by each of the single levers SL1, SL2.

Each of the single levers SL1, SL2 comprises two pivot points PA3, PA4 providing a first pivot point PA3 and a second pivot point PA4 (the pivot axes of the single lever pivot points PA3, PA4 are understood as axes parallel to the transverse axis y). In particular, the first pivot point PA3 is substantially connected in relation to the base structure BS, in particular to the floor FL or to the track mechanism, especially to the upper track T2. Additionally, the second pivot point PA4 is substantially connected in relation to the seat pan frame PF1. In particular, the second pivot point PA4 is substantially fixed to each of the lateral seat pan sides PF1.1, PF1.2. Further, the second pivot point PA4 is provided in relation to the back seat pan side.

According to another embodiment, each of the single lever pivot points PA3, PA4 is provided by a pivot fitting F3, F4, and recliner mechanism in particular. For example, the recliner mechanism is configured as a rotary recliner or a ratchet recliner or any other possible recliner mechanism. In particular, the recliner mechanism is configured as a wobble drive mechanism.

The TTL position P1 of the seat S is a position in which the backrest B is in a substantial upright position with respect to the seat pan P, the base structure BS as well as to the floor FL. In particular, the backrest B is in a position with an angle with respect to the vertical axis z, especially of about 3° to 12°. The leg rest L is in a position with an angle with respect to the vertical axis z, especially of about 0° or less than 0°, for example -3° to -10°. Further, the single levers SL1, SL2 are in a position with an angle with respect to the vertical axis z of about -45°.

In the TTL position P1 the seat pan P of the seat S is positioned substantially parallel to the base structure BS as well as to the aircraft floor FL.

In other words, an adjusting device or mechanism comprises at least one fitting F1 to Fn which is configured as an electric-powered continuously adjustable fitting F1 to Fn capable of adjusting an inclination between two articulated legs 3, 4 which may be connected to or part of the seat pan frame PF1, the backrest frame BF1 or the leg rest frame LF1.

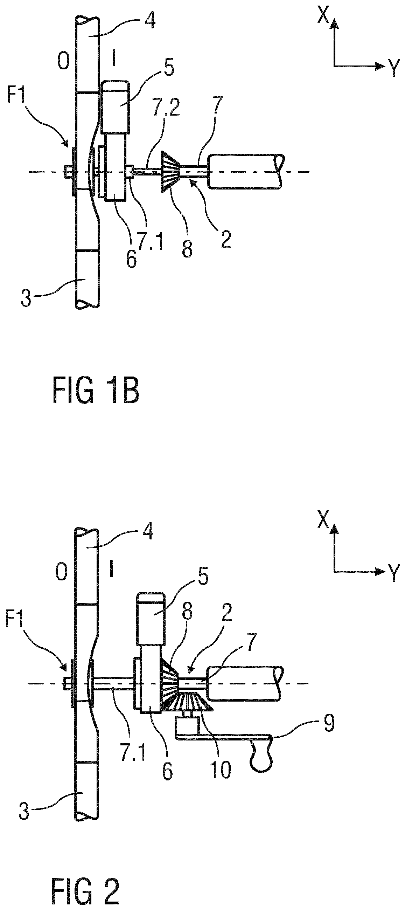

Figure 1B is a schematic view of a first embodiment of at least one of the powered continuously adjustable fitting F1 to Fn for the seat S, in particular an aircraft passenger seat, with a mechanical override system 2. The disclosure of the electric-powered continuously adjustable fittings F1 to Fn is further described for example on the basis of one of the similar fittings F1 to Fn, namely for fitting F1.

The powered continuously adjustable fitting F1 comprises an electric motor 5 acting through a gearbox 6 on a transmission rod 7 which may be rotationally fixed to one of the articulated legs 3, 4 while being rotatable with respect to the other one, to which the motor 5 and gearbox 6 may be rotationally fixed. The gearbox 6 is adapted to engage a profiled first section 7.1 of the transmission rod 7, wherein the first section 7.1 may have a toothed, square, hexagonal or otherwise non-circular cross section corresponding to a cross section of a driven gear of the gearbox 6 such that rotation of the motor 5 and gearbox 6 causes rotation of the transmission rod 7 and thus an adjustment movement of the powered continuously adjustable fitting F1. The transmission rod 7 comprises a second section 7.2 which is not profiled, e.g. has a circular cross section, or which is profiled in a way not corresponding to the cross section of the driven gear of the gearbox 6 such that, when the motor 5 and gearbox 6 are moved along the axis of the transmission rod 7 away from the first section 7.1 to the second section 7.2, the gearbox disengages the transmission rod 7 such that the gearbox 6 and the transmission rod 7 can rotate independently.

Moreover, a first gear-wheel 8, in particular a bevel wheel, is provided on the transmission rod 7 and rotationally fixed to the transmission rod 7.

In the first embodiment, the first section 7.1 and the second section 7.2 as well as the motor 5 and the gearbox 6 are arranged on an inside I of the transmission rod 7, i.e. an area of the transmission rod 7 extending between two sides of the seat, i.e. within the seat.

In figure 1, the gearbox 6 is engaged to the first section 7.1 such that if the motor 5 is powered and caused to rotate, rotation of the motor 5 and gearbox 6 causes rotation of the transmission rod 7 and thus an adjusting movement of the powered continuously adjustable fitting F1.

Figure 2 is a schematic view of the first embodiment of the powered continuously adjustable fitting F1 with the motor 5 and gearbox 6 moved from the first section 7.1 to the second section 7.2 and thus out of engagement with the transmission rod 7, e.g. in case of a power breakdown or failure of the motor 5 and with the mechanical override system 2 being used. A crank 9 having a second gear-wheel 10, is attached to the transmission rod 7 such that the second gear-wheel 10 engages the first gear-wheel 8. The powered continuously adjustable fitting F1 may thus be manually adjusted without interfering with the motor 5 and gearbox 6, which may be self-locking. The first gear-wheel 8 and the crank 9 with the second gear-wheel 10 are part of the mechanical override system 2.

The crank 9 may be normally stored in a compartment within the seat and only be removed and attached to the transmission rod 7 if required. In some embodiments, trim and cushions may have to be removed from the seat to allow attaching the crank 9 to the transmission rod 7.

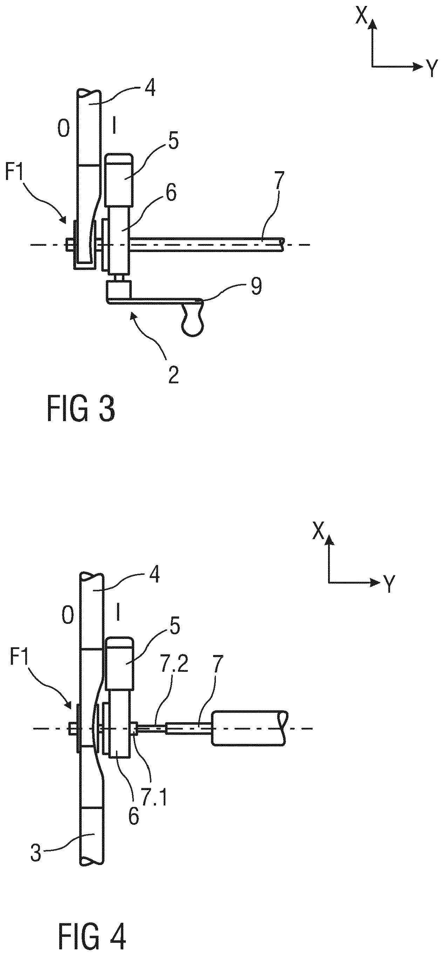

**Figure 3** is a schematic view of a second embodiment of a powered continuously adjustable fitting F1 for a seat, in particular an aircraft passenger seat, with a mechanical override system 2.

The adjusting device comprises the at least one fitting F1 which is configured as an electric-powered continuously adjustable fitting F1 capable of adjusting an inclination between two articulated legs 3, 4 which may be connected to or part of the seat pan P, the backrest B or the leg rest L..

The powered continuously adjustable fitting F1 comprises an electric motor 5 acting through a gearbox 6 on a transmission rod 7 which may be rotationally fixed to one of the articulated legs 3, 4 while being rotatable with respect to the other one, to which the motor 5 and gearbox 6 may be rotationally fixed. The gearbox 6 is adapted to engage a profiled first section 7.1 of the transmission rod 7, wherein the first section 7.1 may have a toothed, square, hexagonal or otherwise non-circular cross section corresponding to a cross section of a driven gear of the gearbox 6 such that rotation of the motor 5 and gearbox 6 causes rotation of the transmission rod 7 and thus an adjustment movement of the powered continuously adjustable fitting F1.

In the second embodiment, the first section 7.1 and well as the motor 5 and the gearbox 6 are arranged on an inside I of the transmission rod 7, i.e. an area of the transmission rod 7 extending between two sides of the seat, i.e. within the seat.

A crank 9 is removably attached to the gearbox 6 such that rotation of the crank 9 causes rotation of the gearbox 6. The powered continuously adjustable fitting F1 may thus be manually adjusted, e.g. in case of a power breakdown or failure of the motor 5. The crank 9 is part of the mechanical override system 2.

The crank 9 may be normally stored in a compartment within the seat and only be removed and attached to the gearbox 6 if required. In some embodiments, trim and cushions may have to be removed from the seat to allow attaching the crank 9 to the gearbox 6.

**Figure 4** is a schematic view of a third embodiment of a powered continuously adjustable fitting F1 for a seat S, in particular an aircraft passenger seat, with a mechanical override system 2.

The adjusting device comprises the at least one fitting F1 which is configured as an electric-powered continuously adjustable fitting F1 capable of adjusting an inclination between two articulated legs 3, 4 which may be connected to or part of the seat pan P, the backrest B or the leg rest L.

The powered continuously adjustable fitting F1 comprises an electric motor 5 acting through a gearbox 6 on a transmission rod 7 which may be rotationally fixed to one of the articulated legs 3, 4 while being rotatable with respect to the other one, to which the motor 5 and gearbox 6 may be rotationally fixed. The gearbox 6 is adapted to engage a profiled first section 7.1 of the transmission rod 7, wherein the first section 7.1 may have a toothed, square, hexagonal or otherwise non-circular cross section corresponding to a cross section of a driven gear of the gearbox 6 such that rotation of the motor 5 and gearbox 6 causes rotation of the transmission rod 7 and thus an adjustment movement of the powered continuously adjustable fitting F1. The transmission rod 7 comprises a second section 7.2 which is not profiled, e.g. has a circular cross section, or which is profiled in a way not corresponding to the cross section of the driven gear of the gearbox 6 such that, when the transmission rod 7 is axially moved relative to the motor 5 and gearbox 6 towards an outside O of the seat, the gearbox disengages the first section 7.1 and aligns with the second section 7.2 without engaging it such that the gearbox 6 and the transmission rod 7 can rotate independently.

In the third embodiment, the first section 7.1 and the second section 7.2 as well as the motor 5 and the gearbox 6 are by default arranged on an inside I of the transmission rod 7, i.e. an area of the transmission rod 7 extending between two sides of the seat, i.e. within the seat.

In figure 4, the gearbox 6 is engaged to the first section 7.1 such that if the motor 5 is powered and caused to rotate, rotation of the motor 5 and gearbox 6 causes rotation of the transmission rod 7 and thus an adjusting movement of the powered continuously adjustable fitting F1.

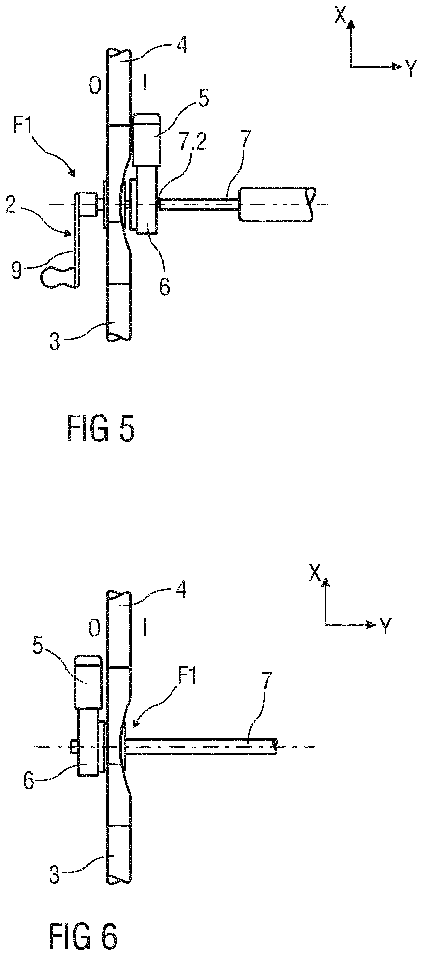

**Figure 5** is a schematic view of the third embodiment of the powered continuously adjustable fitting 1 with the transmission rod 7 having been axially moved towards the outside O while the motor 5 and gearbox 6 have remained in place so the gearbox 6 has disengaged the transmission rod 7, e.g. in case of a power breakdown or failure of the motor 5 and with the mechanical override system 2 being used. The transmission rod 7 hence protrudes from the powered continuously adjustable fitting F1 at the outside O to a higher extent. A crank 9 is attached to the extending end of the transmission rod 7. The powered continuously adjustable fitting F1 may thus be manually adjusted without interfering with the motor 5 and gearbox 6, which may be self-locking. The crank 9 is part of the mechanical override system 2.

The crank 9 may be normally stored in a compartment within the seat and only be removed and attached to the transmission rod 7 if required.

**Figure 6** is a schematic view of a fourth embodiment of a powered continuously adjustable fitting F1 for a seat S, in particular an aircraft passenger seat, with a mechanical override system 2.

The powered continuously adjustable fitting F1 comprises an electric motor 5 acting through a gearbox 6 on a transmission rod 7 which may be rotationally fixed to one of the articulated legs 3, 4 while being rotatable with respect to the other one, to which the motor 5 and gearbox 6 may be rotationally fixed. The gearbox 6 is adapted to engage a profiled first section 7.1 of the transmission rod 7, wherein the first section 7.1 may have a toothed, square, hexagonal or otherwise non-circular cross section corresponding to a cross section of a driven gear of the gearbox 6 such that rotation of the motor 5 and gearbox 6 causes rotation of the transmission rod 7 and thus an adjustment movement of the powered continuously adjustable fitting F1.

In the fourth embodiment, the first section 7.1 and the motor 5 and the gearbox 6 are by default arranged on an outside I of the transmission rod 7, i.e. an area of the transmission rod 7 protruding from the seat.

In figure 6, the gearbox 6 is engaged to the first section 7.1 such that if the motor 5 is powered and caused to rotate, rotation of the motor 5 and gearbox 6 causes rotation of the transmission rod 7 and thus an adjusting movement of the powered continuously adjustable fitting F1.

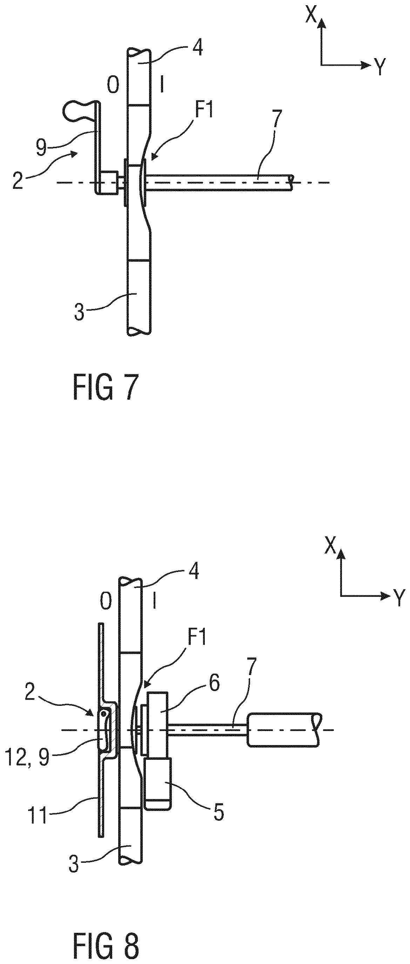

**Figure 7** is a schematic view of the fourth embodiment of the powered continuously adjustable fitting F1 with the motor 5 and gearbox 6 having been removed, e.g. in case of a power breakdown or failure of the motor 5 and with the mechanical override system 2 being used. A crank 9 is attached to the extending end of the transmission rod 7 to which the gearbox 6 had previously been attached. The powered continuously adjustable fitting F1 may thus be manually adjusted without interfering with the motor 5 and gearbox 6, which may be self-locking. The crank 9 is part of the mechanical override system 2.

The crank 9 may be normally stored in a compartment within the seat and only be removed and attached to the transmission rod 7 if required. The embodiment allows for an easy replacement of the motor 5 and gearbox 6.

**Figure 8** is a schematic view of a fifth embodiment of a powered continuously adjustable fitting F1 for a seat, in particular an aircraft passenger seat, with a mechanical override system 2.

The powered continuously adjustable fitting F1 comprises an electric motor 5 acting through a gearbox 6 on a transmission rod 7 which may be rotationally fixed to one of the articulated legs 3, 4 while being rotatable with respect to the other one, to which the motor 5 and gearbox 6 may be rotationally fixed. The gearbox 6 is adapted to engage a profiled first section 7.1 of the transmission rod 7, wherein the first section 7.1 may have a toothed, square, hexagonal or otherwise non-circular cross section corresponding to a cross section of a driven gear of the gearbox 6 such that rotation of the motor 5 and gearbox 6 causes rotation of the transmission rod 7 and thus an adjustment movement of the powered continuously adjustable fitting F1.

In the fifth embodiment, the first section 7.1 and the motor 5 and the gearbox 6 are arranged on an inside I of the transmission rod 7, i.e. an area of the transmission rod 7 extending between two sides of the seat, i.e. within the seat.

On an outside O of the seat, a cover 11 is arranged on an end of the transmission rod 7 protruding from the seat. A crank 9 is formed by a handle 12 which may be swung out of the cover 11. The crank 9 is connected to the transmission rod 7.

If the motor 5 is powered and caused to rotate, rotation of the motor 5 and gearbox 6 causes rotation of the transmission rod 7 and thus an adjusting movement of the powered continuously adjustable fitting F1.

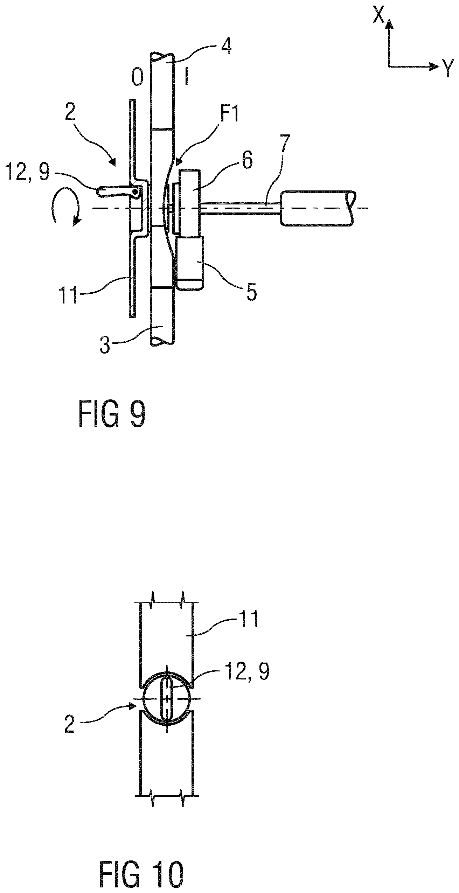

**Figure 9** is a schematic view of the fifth embodiment of the powered continuously adjustable fitting F1 in case of a power breakdown or failure of the motor 5 and with the mechanical override system 2 being used, i.e. the handle 12 swung out of the cover 11 and used as a crank 9. The powered continuously adjustable fitting F1 may thus be manually adjusted. The crank 9 is part of the mechanical override system 2.

**Figure 10** is a front view of the cover 11 with the swung in handle 12.

In each of the above described first to fifth embodiments, the powered continuously adjustable fitting F1 may comprise a lever 13 and/or a wobbling adjuster 14.

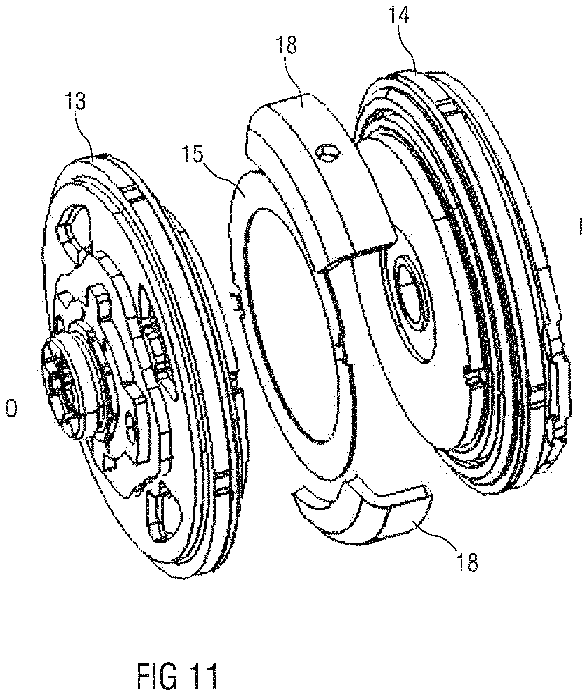

**Figure 11** is a schematic view of a discontinuously adjustable fitting (gear fitting) or lever 13 and a continuously adjustable fitting (detent fitting) or wobbling adjuster 14, in particular as disclosed in US 2012/0223562 A1 which is hereby incorporated into the present disclosure by reference.

A distance disk 15 may be arranged between the lever 13 and the wobbling adjuster 14. The distance disk 15 may be laser welded to the lever 13. The lever 13 is directed to the outside O of the seat S. The wobbling adjuster 14 is directed to the inside I of the seat S. The lever 13 and the wobbling adjuster 14 may be inversely arranged wherein the lever 13 is arranged on the inside the seat frame and the wobbling adjuster 14 is arranged on the outside of the seat frame.

One or more clamps 18 are provided for attaching the wobbling adjuster 14 to the lever 13.

The lever 13 may be unlocked by a handle or Bowden wire (not shown). The wobbling adjuster 14 may then be manually adjusted, e.g. to bring the seat into a TTL position (take-off, taxiing on the ground or landing). The lever 13 may then lock the wobbling adjuster 14, e.g. by releasing the handle or Bowden wire.

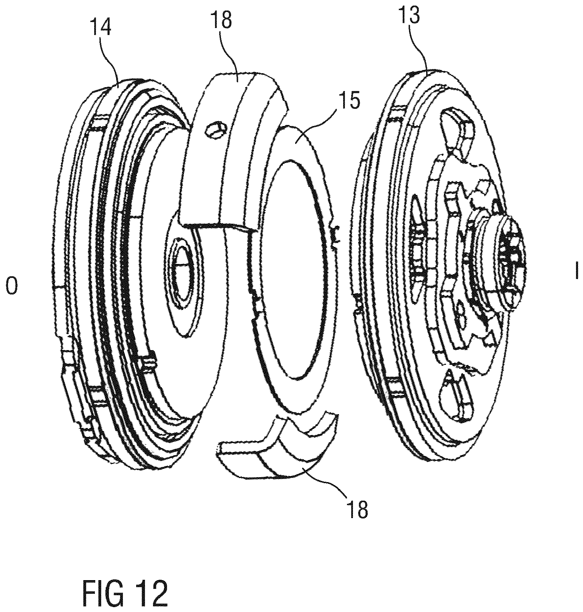

**Figure 12** is another schematic view of the lever 13 and the wobbling adjuster 14, in particular as disclosed in US 2012/0223562 A1.

A distance disk 15 may be arranged between the lever 13 and the wobbling adjuster 14. The distance disk 15 may be laser welded to the lever 13. The lever 13 is directed to the inside I of the seat.

One or more clamps 18 are provided for attaching the wobbling adjuster 14 to the lever 13.

The lever 13 may be unlocked by a handle or Bowden wire (not shown). The wobbling adjuster 14 may then be manually adjusted, e.g. to bring the seat into a TTL position (take-off, taxiing on the ground or landing). The lever 13 may then lock the wobbling adjuster 14, e.g. by releasing the handle or Bowden wire.

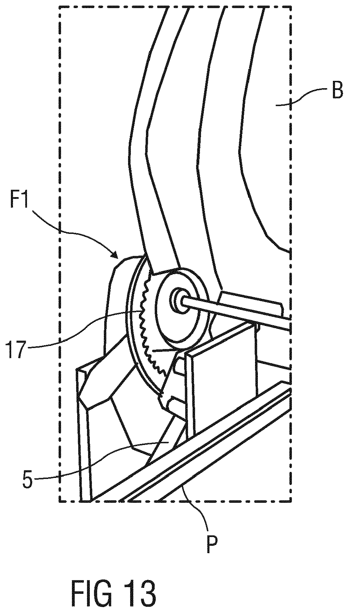

**Figure 13** is a schematic view of a seat with frame parts of the seat pan P and the backrest B connected by a powered continuously adjustable fitting F1 comprising a toothed segment 17 engaged by an electric motor 5. The powered continuously adjustable fitting F1 may comprise a lever 13 and/or a wobbling adjuster 14 as described below. The lever 13 may be unlocked, e.g. by a handle or Bowden wire (not shown). The lever 13 may be configured as a manual locking latch or manual locking recliner. The wobbling adjuster 14 may be configured for example as a recliner comprising a gear mechanism, for example a planetary gear mechanism.

The powered continuously adjustable fitting F1 may then be adjusted by the motor 5, e.g. to bring the seat into a TTL position (take-off, taxiing on the ground or landing). The lever 13 may then lock the wobbling adjuster 14, e.g. by releasing the handle or Bowden wire.

In other embodiments, the transmission rod 7 may be accessible by a separate electric screwdriver.

In yet another embodiment, an interface for a separate power pack may be provided, preferably a control unit of the seat which recognizes the power pack so that the seat is adjusted into a TTL position (take-off, taxiing on the ground or landing) as a result.

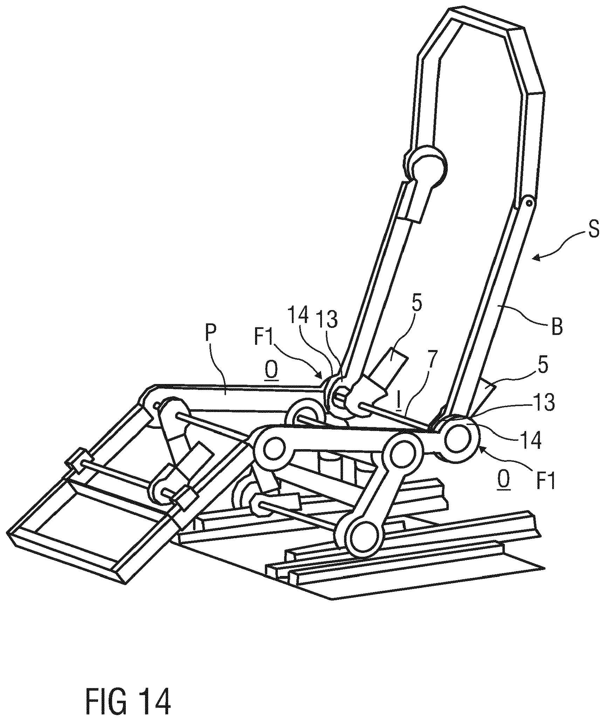

In an exemplary embodiment, shown in figure 14, two powered continuously adjustable fittings F1 are provided on the seat S between the seat pan P and the backrest B aligned with each other, the powered continuously adjustable fittings F1 respectively comprising a wobbling adjuster 14 arranged outside O and a lever 13 arranged inside I and connected in series. One longer transmission rod 7 is provided for both levers 13. Two short transmission rods 7 are provided for connecting each wobbling adjuster 14 with a motor 5 which is arranged inside I.

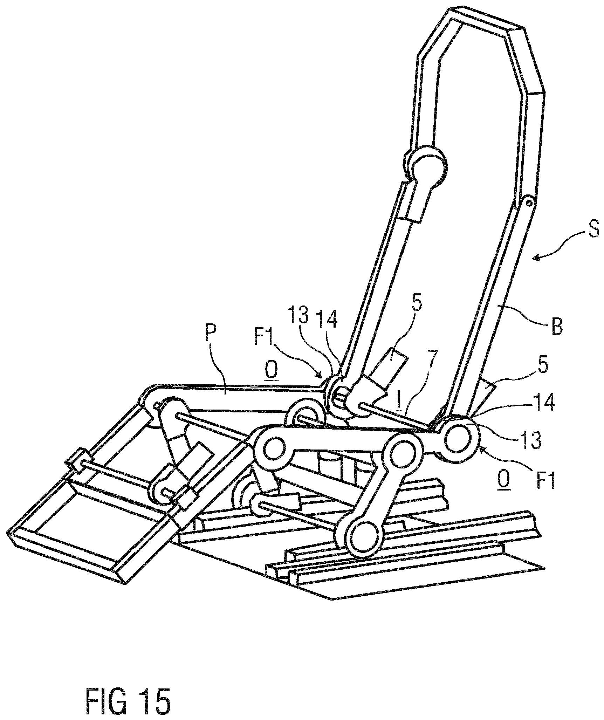

In another exemplary embodiment, shown in figure 15, two powered continuously adjustable fittings F1 are provided on the seat S between the seat pan P and the backrest B aligned with each other, the powered continuously adjustable fittings F1 respectively comprising a wobbling adjuster 14 arranged inside I and a lever 13 arranged outside O and connected in series. One transmission rod 7 is provided for connecting each wobbling adjuster 14 with a motor 5, which is arranged inside I.

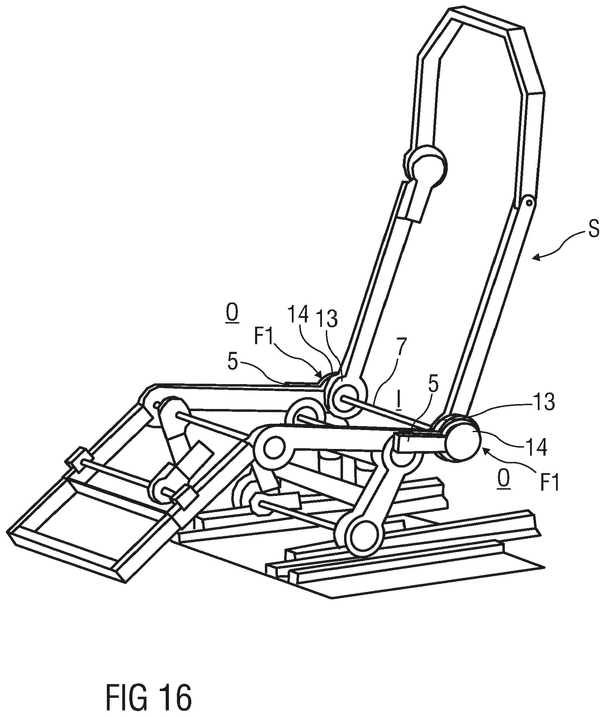

In yet another embodiment, shown in figure 16, two powered continuously adjustable fittings F1 are provided on the seat between the seat pan and the backrest aligned with each other, the powered continuously adjustable fittings F1 respectively comprising a wobbling adjuster 14 arranged outside O and a lever 13 arranged inside I. One longer transmission rod 7 is provided for both levers 13. Two short transmission rods 7 are provided for connecting each wobbling adjuster 14 with a respective motor 5 which is arranged outside O.

### LIST OF REFERENCES

- 2: mechanical override system
- 3: leg
- 4: leg
- 5: electric motor
- 6: gearbox
- 7: transmission rod
- 7.1: first section
- 7.2: second section
- 8: first gear-wheel
- 9: crank
- 10: second gear-wheel
- 11: cover
- 12: handle
- 13: lever
- 14: wobbling adjuster
- 15: distance disk
- 16: backrest
- 17: toothed segment
- 18: clamp

- B: backrest
- B1: shoulder support
- B2: headrest support
- BF1: backrest frame
- F1..F5: continuously adjustable fitting
- FL: floor
- I: inside
- L: legrest
- O: outside
- P: seat pan
- PA1..PA5: pivot axis
- PF1: seat pan frame
- PF1.1, PF1.2: lateral seat pan side
- P1: TTL position
- TTL: taxi, takeoff and landing
- SL1, SL2: single lever
- T1: lower track
- T2: upper track

## Claims

1. A seat for a vehicle, in particular for an aircraft, comprising:
- a seat pan (P) having a seat pan frame with two lateral seat pan sides, a front seat pan side and a back seat pan side,
- a backrest (B) having a backrest frame which is pivotably mounted to the back seat pan side at a backrest pivot axis,
- a leg rest (L) having a leg rest frame which is pivotably mounted to the front seat pan side at a leg rest pivot axis,
- an adjusting device (1) for adjusting at least the seat pan (19), the backrest (B) or the leg rest,
wherein at least the backrest (B) and the leg rest are articulated with respect to the seat pan (P) such that the seat (S) is positionable into at least one of a taxi, takeoff and landing position (P1), a comfort inclined position or a sleeping position by the adjusting device (1), wherein the adjusting device (1) comprises at least one fitting which is configured as an electric-powered continuously adjustable fitting (F1).

2. The seat according to claim 1, wherein at least one of the seat pan (P), the backrest (16) or the leg rest comprises a single electric-powered continuously adjustable fitting (1) on each of their lateral sides.

3. The seat according to claim 2, wherein the adjusting device (1) is configured to continuously adjust a transmission rod (7) coupling the two fittings to at least one of the seat pan (19), the backrest (16) or the leg rest.

4. The seat according to claim 1, wherein at least one of the fittings, the adjusting device (1) or the transmission rod (7) comprises an override mechanism (2) which brings the seat pan (19), the backrest (16) and the leg rest in the taxi, takeoff and landing position in the case that the electric-powered continuously adjustable fitting (1) failed.

5. The seat according to claim 2, wherein the override mechanism (2) is configured as a manual crank (9).

6. The seat according to claim 3, wherein a motor (5) is provided to actuate the fitting (1), wherein the motor (5) comprises a gearbox (6) to interface the crank (9) to the motor (5).

7. The seat according to claim 3, wherein the transmission rod (7) comprises a gear mechanism and/or an outer rod end to interface the crank (9) to the transmission rod (7).

8. The seat according to claim 3, wherein the manual crank (9) is configured as a foldable handle (12) which is articulated at a cover (11) attached to the transmission rod (7) and foldable between a swung in position and a swung out position.

9. The seat according to claim 1, wherein the seat pan frame is pivotably connected to a base by a single lever (13) on each of the two lateral seat pan sides.

10. The seat according to claim 9, wherein the seat pan (19), the backrest (16) and the leg rest are articulated with respect to each other and with respect to the base by each of the single levers such that the seat is positionable into at least one of a taxi, takeoff and landing position, a comfort inclined position and a sleeping position.
